# EUROPEAN PATENT APPLICATION

(11) **EP 1 617 670 A1**
(43) Date of publication of application: **18.01.2006**
(21) Application number: 04016522.7
(22) Date of filing: 14.07.2004
(51) Int. Cl.: H04N 7/18

(54) **Partial image saving system and method**

(71) Applicant: Chang, Chao-Hung, Taichung (TW)
(72) Inventor: Chang, Chao-Hung, Taichung (TW)
(74) Representative: Kaminski, Susanne

(57) **Abstract**

The present invention relates to a system and method for partial image saving. The system contains at least one image-taking device, and one digital data saving and process device, which is connected to said image-taking device for receiving and process the latest image data. The digital data saving and process device contains at least one data saving device, and one image data process device. The data saving device contains at least one temporary data file, and at least one long-term data file. The latest complete image data taken by the image-taking device is first stored in the temporary data file. The image data process device will then identify targets of interest, within the complete image area, based on user-defined criteria. The image data around the targets of interest are finally stored in the long-term data file. The temporary data file will then be empty, ready for next image data. With this method, the repeated, un-important background image data are eliminated; only the image data of the area surrounding the targets of interest are stored and/or transmitted. The burden of storing and transmitting image data can be significantly reduced. The purpose of surveillance covering large area while keeping only the image data of targets of interest is then meet.

## Description

### Field of Invention

The invention relates to a partial image saving system and method thereof, particularly to one where recurring background is deleted while preserving image data of specific targets only in order to improve storage efficiency and to reduce the burden for data transmission, thereby achieving the objective of covering a large surveillance area but keeping the image data for targets of interest only.

### Background

Surveillance system equipped with video cameras is commonly installed at building entrances, parking lots, convenience stores, banks or even residences. The video camera equipped with wide-angle lens serve to monitor and record people and vehicles passing by within an intended surveillance area to allow recall of video tapes (or digital recording media) that have recorded the occurrences of accidents, criminal cases or specific circumstances, to pursue after responsible persons.

In the conventional surveillance system, videotapes or hard disk drives (HDD) in digital data saving and processing devices are usually employed as means for saving image data. In the past, the resolution of the conventional video cameras is usually low (with CCD sensors of about 300,000 pixels). Since using the recently developed high-resolution, color video cameras (with pixel counts of CCD sensors up to tens of millions) would result in huge image data, inefficient storage capacity, and reduced recording time, so most of current surveillance system still adopts low-resolution cameras as means for acquiring images. However, because the cameras adopt wide-angle lenses in the conventional surveillance system as means for recording the wide-angle images within the intended surveillance area, when police want to identify a specific moving target within picture frames, the image usually cannot be clearly identified due to its low pixel number. Particularly, when the targets of interest are at a distance from the camera, the detailed features can hardly be recognized, thereby failed to meet the objectives for recording the past events for surveillance purpose.

In the conventional video surveillance system, a mechanically driven rotating lens is needed if one intends to monitor a wide range of area while acquiring detailed information at the same time, such as by using a PTZ (Pan Tilt Zoom) camera to target at a specific area. However, durability of such camera is a problem, since the life expectancy is constrained by the mechanical life of driving mechanism. Furthermore, the lens needs to be zoomed in, zoomed out, and re-focused after each movement, thereby increasing the response time in the process of acquiring images. Also, manual operation is needed to zoom in a specific target.

Though the presently available image processing software is able to enhance the image data, the image enhancement technology cannot solve all problems; only make limited improvements. Also, due to low-resolution camera adopted by the conventional surveillance system, the images for targets of interest is blurred and hard to be recognized even after magnification.

Hence, it is needed to develop a surveillance system that is able to acquire and record clear images of the targets of interest without increasing storage load or burden for data transmission.

### Summary of Invention

In view of the above, this invention discloses a partial image saving system and method thereof, particularly to one where recurring background is deleted while preserving image data of specific targets only to improve storage efficiency and to reduce the burden for data transmission, thereby achieving the objective of covering a large surveillance area but keeping the image data for targets of interest only. Also, the detailed features of the targets of interest will remain clearly identifiable even after magnification.

To achieve the above objectives, this invention discloses a partial image saving system and method, including: an image-taking device for continuously acquiring image data within an intended surveillance area; and an digital data saving and processing device connected to the image-taking device and for receiving the latest image data, wherein the digital data saving and processing device includes at least one data saving device and one image data processing device, the data saving device having therein plurality of temporary and long-term data files. The complete image data acquired by the image-taking device is first stored in the temporary data file. The image data processing device will then identify targets of interest, within the complete image, based on user-defined criteria, and store the image data near the targets of interest in the long-term data files. The original image data in the temporary file is then empted after the screening process. As such, image data for recurring background may be deleted while preserving image data of specific targets only to improve storage efficiency and to reduce the burden for data transmission, thereby achieving the objective of covering a large surveillance area but keeping the image data for targets of interest only.

### Brief Description of the Drawings

The features and advantages of this invention will become even more apparent from the following description of a preferred embodiment of the invention and from the drawings in which:
Fig. 1 is a block diagram illustrating the partial image saving system of this invention.
Fig. 2 is a flow chart illustrating the process steps of this invention.
Fig. 3 is a view illustrating the complete image stored in the temporary data files
Fig. 4 is a view illustrating the selection process, based on user-defined criteria; motion detection is used in this case
Fig. 5 is a view illustrating only the image data of selected targets is stored in the long-term data files

### Detailed Description of the Preferred Embodiments

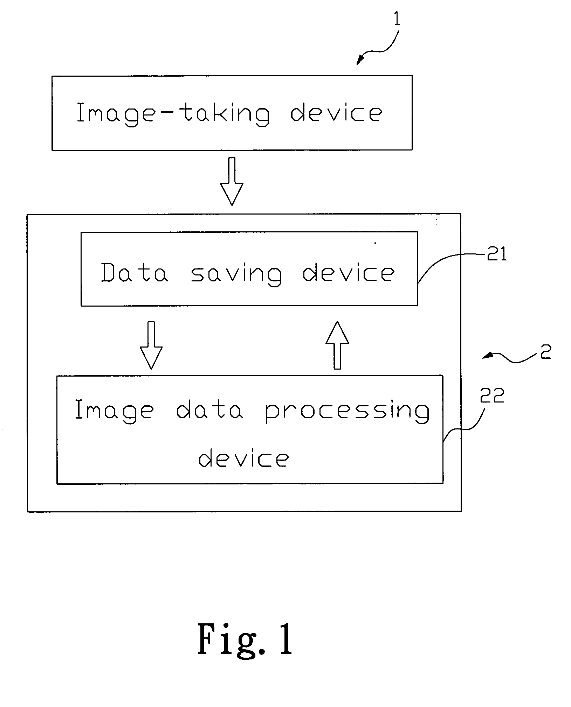

Fig. 1 is a block diagram illustrating the partial image saving system of this invention. As shown, the partial image saving system for capturing image data of specific targets comprises:
   an image-taking device 1, which is a high resolution digital video camera, for continuously taking image data within an intended surveillance area;
   a digital data saving and processing device 2, connected to the image-taking device 1, for receiving the latest image data, the digital data saving and processing device 2 consists of at least one data saving device 21 and one image data processing device 22 therein;
   the data saving device 21, which is a high capacity HDD (hard disc drive) or any digital memory device and includes plurarity of temporary and long-term data files,
   wherein image data acquired by the image-taking device 1 is temporarily stored in the temporary data files of the data saving device 21. Then, the image data processing device 22 employs various image-processing technics to identify targets of interest and transfers the image data near the targets of interest to the long-term data files. The complete image data in the temporary data files, after been processed, is then deleted to release storage space ready for next complete image data.

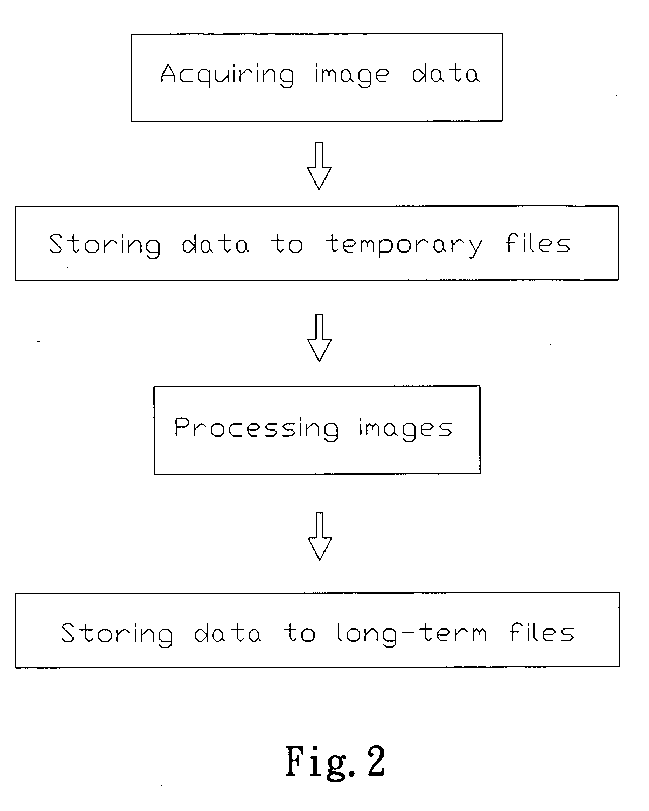

Fig. 2 is a flow chart illustrating the partial image saving method of this invention. As shown, the method comprises the steps of:
   (1) acquire image data within an intended surveillance area by means of an image-taking device;
   (2) store the complete image data as acquired in temporary data files; and
   (3) use various image-processing technics to identify targets of interest in the complete picture, store the image data near the selected targets in long-term data files, and delete the temporary data files to release storage space ready for next complete image data.

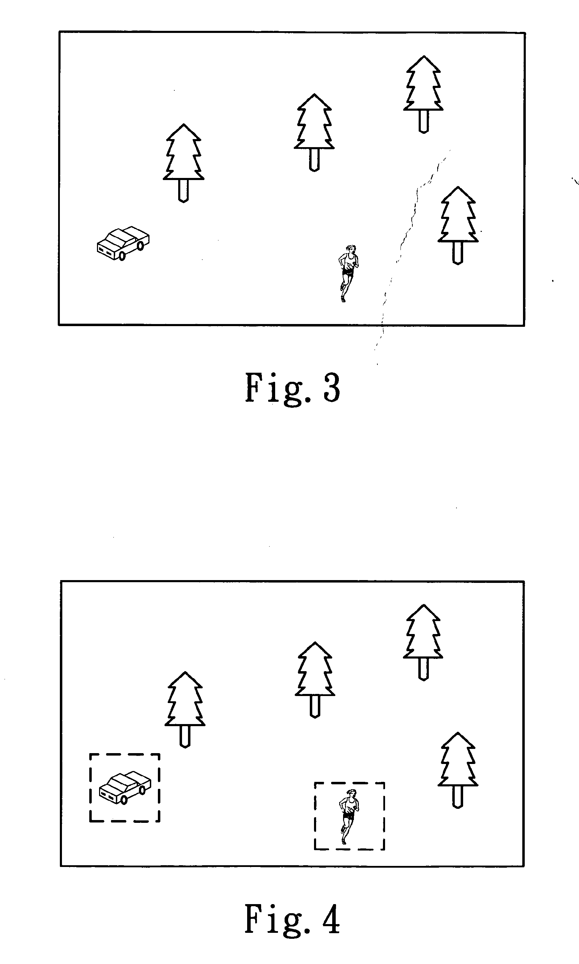

According to the system and method of this invention, the way targets are selected may be determined by the user defined criteria and/or installation locations. Figs. 3, 4 and 5 are reference views illustrating the preferred image data process according to this invention.

As shown in Fig. 3, a high-resolution camera is employed to acquire a complete image of a specific surveillance area. As shown in Fig. 4, after the passing-by people or vehicle are individually identified to be the targets of interest, the image data processing device will store individually the selected image data near the people and vehicle in the long-term data files, while image data for the recurring background are omitted. The temporary data files that have been processed are then deleted to conserve a great portion of storage space. The targets of interest that are designated to be captured may be determined by, but not limited to, the following criteria: movement, outline shape, color, dimensions, temperature detected by infra-red rays, and speed, in accordance with the actual intallation locations.

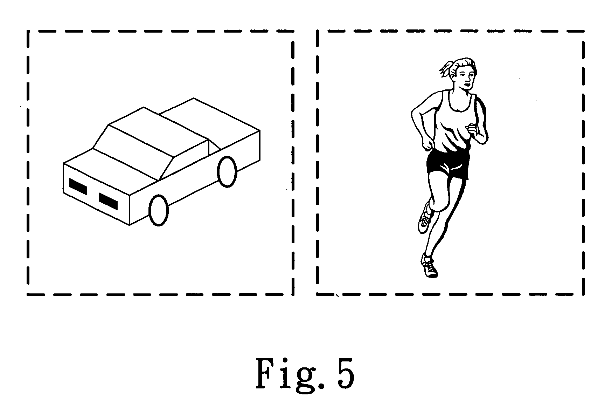

In addition, because the image data for the people and vehicle that are captured and stored individually in the long-term data files are high-resolution images composed of fine pixels, the picture would not be blurred even after magnifications (as shown in Fig. 5).

As such, deleting the recurring background while preserving image data of specific targets only improve storage efficiency and reduce the burden for data transmission, thereby achieving the objective of covering a large surveillance area but keeping the image data for targets of interest only.

The partial image saving system and method as described above make improvements to the prior art and meet the patentability requirements prescribed in the Law. A patent application is hereby submitted.

This invention is related to a novel creation that makes a breakthrough in the art. Aforementioned explanations, however, are directed to the description of preferred embodiments according to this invention. Since this invention is not limited to the specific details described in connection with the preferred embodiments, changes and implementations to certain features of the preferred embodiments without altering the overall basic function of the invention are contemplated within the scope of the appended claims.

## Claims

1. A partial image saving system and method, comprising:
an image-taking device for continuously acquiring image data within an intended surveillance area; and
a digital data saving and processing device, connected to said image-taking device, for receiving the latest image data, wherein said digital data saving and processing device includes at least one data saving device and one image data processing device, said data saving device having therein plurarity of temporary and long-term data files;
wherein complete image data acquired by said image-taking device is temporarily stored in said temporary data files, said image data processing device then using various image processing technics to identify targets of interest within said complete image and stores only said image data near said selected targets in said long-term data file. Said complete image data in said temporary data files after been processed is then deleted to release storage space, such that said temporary data file is ready for next complete image data.

2. Said partial image saving system of Claim 1, wherein said image-taking device is a high-resolution video camera.

3. Said partial image saving system of Claim 1, wherein said digital data saving and processing device is a computer or a digital electronic device capable of performing such task.

4. Said partial image saving system of Claim 1, wherein said data saving device is a high capacity HDD (hard disc drive) or other digital memory devices.

5. A method for capturing partial image data of specific targets, comprising the steps of:
(1) acquiring image data within an intended surveillance area continuously by means of an image-taking device;
(2) store said image data as acquired in temporary data files; and
(3) identify targets of interest in said temporary data files by means of image data process, store said image data near said selected targets in long-term data files, and delet said image data in said temporary data files to release storage space ready for next complete image.

6. Said method for capturing partial image data of specific targets of Claim 5,
wherein said targets of interest are selected by one of the following criteria in accordance with the actual installtion locations or user defind requirements: movement, outline shape, color, dimensions, temperature detected by infra-red rays, and speed.
